(19) Europäisches Patentamt
European Patent Office
Office européen des brevets

(11) Publication number: 0 254 663 B1

(12) # EUROPEAN PATENT SPECIFICATION

(45) Date of publication of the patent specification: 17.01.90

(51) Int. Cl.[4]: C 07 F 9/12, A 61 K 31/66

(21) Application number: 87500041.6

(22) Date of filing: 22.06.87

(54) **2-(2-Phosphonoxyphenyl-Carbonyloxy)benzoic acid, salts thereof, a process for the preparation thereof.**

(30) Priority: 23.06.86 ES 556922

(43) Date of publication of application: 27.01.88 Bulletin 88/04

(45) Publication of the grant of the patent: 17.01.90 Bulletin 90/03

(84) Designated Contracting States: DE FR GB IT

(56) References cited:

MEDICAMENTOS DE ACTUALIDAD, vol. 13(1), 1977, Spain A.C. PLAYLE "Salsalate" pages 34-37

CHEMICAL ABSTRACTS, vol. 106, n 9, Marsch 2, 1987, Colombus, Ohio, USA Y. TSUDA, Y. TSUDA "(Phosphonomethyl) benzamide derivatives abstracts-n 67 489s

(73) Proprietor: SUEROS, ANTIBIOTICOS Y LABORATORIO DE VACUNOTERAPIA, SOCIEDAD LIMITADA (LABORATORIO S.A.L.V.A.T., S.L.)
Gallo 30-36
E-08950 Esplugues de Llobregat (ES)

(72) Inventor: Montserrat Vidal, Carlos
Urgell 241
E-08036 Barcelona (ES)
Inventor: Medina Diez, Javier
Santal 93
E-08021 Barcelona (ES)
Inventor: Riera Mariné, Juan
Mejia Lequerica 32
E-08028 Barcelona (ES)

(74) Representative: Curell Sunol, Jorge
c/o Dr. Ing. M. Curell Sunol I.I. S.L. Passeig de Gràcia 65 bis
E-08008 Barcelona (ES)

EP 0 254 663 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBERGRAF, STOCKHOLM 1990

**Description**

The patent relates to 2-(2-phosphonoxyphenylcarbonyloxy) benzoic acid having the following formula I:

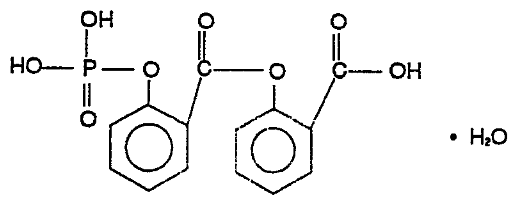

(I)

and salts thereof formed with mono-, di- and trivalent cations. It also relates to a process for the preparation thereof.

This new compound (phosphosalsalate) (PSS) is a salicylic prodrug having a potent activity and minimum side effects.

The document "Medicamentos de Actualidad", volume 13 (1), 1977, pages 34 - 37; M.C. Playle "Salsalate" refers to certain features of the salsalate (SS), or 2-(2-hydroxyphenylcarbonyloxy) benzoic acid, the formula of which is given in connection with the process for the preparation of the PSS. Hereinafter comparisons are drawn between PSS and SS.

PSS has a 49 % anti-inflammatory activity at 200 mg/kg on carrageenin induced rat paw oedema. This is superior to that of salsalate (SS) (24 %) and lower than that of acetyl salycilic acid (ASA) (61 %).

At doses ranging from 100-200 mg/kg/day, for 14 days, PSS inhibits adjuvant arthritis by 40 - 50 %. At equal dose levels, inhibition by ASA is 0 - 39 %.

In adjuvant arthritis, there is observed a depression of the serum reducing activity (SH group levels). PSS affords a 100 % correction at 200 mg/kg/day, while at equal dose levels ASA only affords a 60 % correction.

The inhibitory dose$_{30}$ levels (ID-30) for pain induced in mouse by i.p. injection of acetic acid 30 minutes after oral administration were: 46.3, 98.15, 40 and 129.6 for PSS, PS (phosphosal), ASA and SS, respectively.

PS is the salicylic acid phosphonate and is described in DE-A-2 641 526.

PSS and ASA afford a 90 % correction of the motor activity inhibition produced by inflammatory pain at 200 mg/kg. This activity is superior to that observed for PS (65 %) and SS (32.6 %).

PSS has antipyretic activity against beer yeast induced fever in the rat, superior to ASA and inferior to paracetamol.

At a dose of 100 mg/kg, PSS does not protect from death by respiratory distress caused by i.v. injection of arachidonic acid. ASA provides 72 % protection at 50 mg/kg.

The ulcerogenic activity of PSS (ulcerogenic index = 3.16) is lower than that of ASA (UI = 10.54) or indomethacin (UI = 25.28).

Gastrointestinal hemorrhages caused by PSS at doses of 400 mg/kg, measured as µl blood in faeces, excreted during the following 4 days ($SO_4Fe$ radioisotope method) were significantly lower than those caused by ASA.

Salicylaemia, measured as the area under the serum levels curve, in rats and dogs, is similar for PSS and ASA. Continued administration of PSS and ASA at equal dose levels for 14 days leads to much higher salicylic acid levels for PSS than for ASA.

Acute toxicity of oral PSS is 1.59 g/kg, higher than the $LD_{50}$ of ASA (1.10 g/kg).

The process of preparation is characterised by reacting 2-(2-hydroxyphenylcarbonyloxy) benzoic acid of formula II:

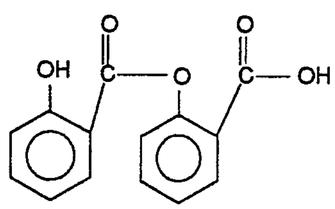

(II)

with phosphorus pentachloride at temperatures ranging from 0 to 100°C.

The acid trichloride formed, of formula III

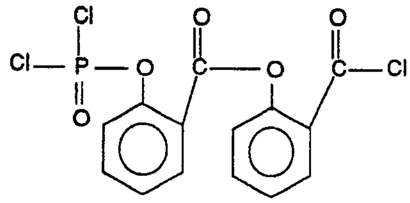

(III)

is hydrolysed in situ by treatment with water in an organic medium, such as;

acetone, methylene chloride, ethyl acetate, etc, the reaction time and temperature conditions varying in terms of the solvent in which it is carried out.

Isolation of the target product will also depend on the medium used. Thus, in the case of the solvents cited, acetone, which allows hydrolysis to be carried out in an homogenous medium, requires the addition of an inert solvent to insolubilise the phosphosalsalate. On the contrary, methylene chloride, which produces a heterogenous hydrolysis medium, affords the advantage of better solubilising the hydrolysis intermediates, as well as the unreacted salsalate, while solubility of the phosphosalsalate is low, whereby it is removed from the medium as it is formed.

It is subsequently purified by crystallisation.

**Example 1**

**Preparation of 2-(2-phosphonoxyphenylcarbonyloxy) benzoic acid.**

516 g (2 moles) of 2-(2-hydroxyphenylcarbonyloxy) benzoic acid and 417 g (2 moles) of phosphorus pentachloride were placed in a 5 l flask equipped with mechanical stirring, thermometer, addition funnel and condenser connected through a moisture trap to a gas absorption column. The mixture was heated with stirring to a temperature ranging from 55 - 75°C until a fluid mass was obtained.

The mixture was cooled and 3 l of methylene chloride were added, followed by the addition of an amount of water slightly in excess of the stoichiometric amount.

The mixture was refluxed until completion of hydrolysis, a white product being insolubilised.

The solvent was removed and thereafter the mixture was resuspended in methylene chloride and distilled under vacuum to complete the removeal of the hydrochloric acid produced in the reaction.

HPLC control of the crude product obtained showed a content of approximately 80 % of the target product.

The product was purified by redissolution in acetone at a moderate temperature and addition of methylene chloride to turbidity. Cooling produced a white solid (492 g). Yield 69 %

M.p.: the product starts to melt at 88°C, becoming a pasty solid.

Elementary analysis for $C_{14}H_{11}O_8P \cdot H_2O$

Calculated: C: 47.19 %; H: 3.56 %; P: 8.70 %

Found: C: 46.72 %; H: 3.59 %; P: 8.80 %

IR (KBr, $cm^{-1}$: 1750 (c = 0)

NMR - $^1H$ (delta, DMSO-$d_6$):7.3....8(m, 8H, H-Ar)

8.7 (broad singlet, OH)

EM(m/e): 339($M^+$ + 1)

Ultraviolet spectrum in methanol: shows a peak at 229 nm E(1 cm, 1 %) = 472.

**Claims**

1. 2-(2-phosphonoxyphenylcarbonyloxy) benzoic acid of formula I:

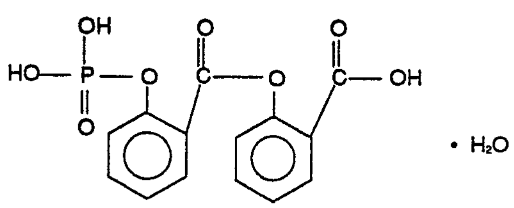

(I)

and salts thereof with mono-, di- and trivalent metals.

2. A process for the preparation of 2-(2-phosphonoxyphenylcarbonyloxy) benzoic acid of formula I

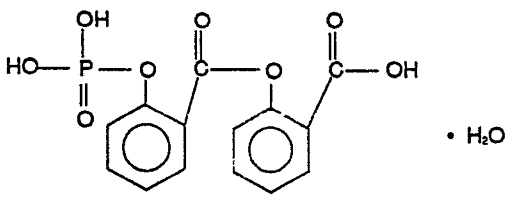

(I)

characterised by reacting 2-(2-hydroxyphenylcarbonyloxy) benzoic acid of formula II

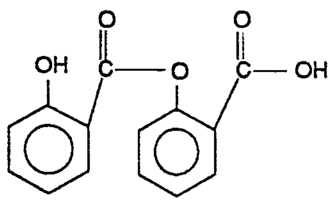

(II)

with phosphorus pentachloride at temperatures ranging from 0°C to 100°C to give the acid trichloride of formula III

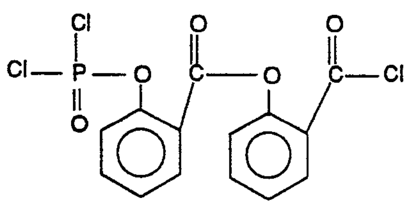

(III)

which is hydrolysed *in situ* by treatment with water in an organic medium.

3. The process of claim 2, characterised in that the acid of formula I is isolated from an aqueous acetone solution by addition of an inert solvent.

4. The process of claim 3, characterised in that the acid of formula I is isolated from a heterogenous water-methylene chloride medium.

5. Compound according to claim 1 as an inflammatory, anti-pyretic and analgesic agent.

**Patentansprüche**

1. 2-(2-Phosphonoxyphenylcarbonyloxy)benzoesäure der Formel I

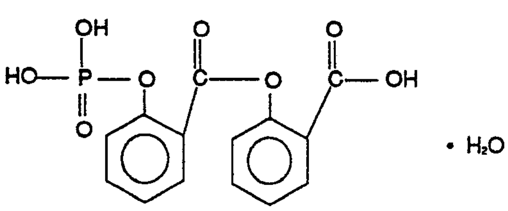

(I)

und Salze davon mit ein-, zwei- und dreiwertigen Metallen.

2. Verfahren zur Herstellung von 2-(2-Phosphonoxyphenylcarbonyloxy)benzoesäure der Formel I

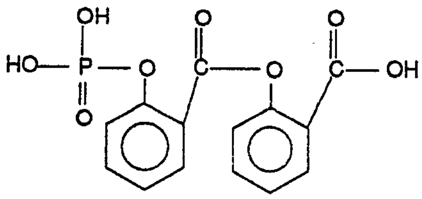

• $H_2O$ (I)

gekennzeichnet durch Umsetzung von 2-(2-Hydroxyphenylcarbonyloxy)benzoesäure der Formel II

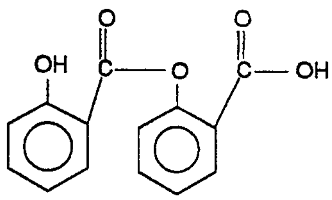

(II)

mit Phosphorpentachlorid bei Temperaturen im Bereich von 0°C bis 100°C unter Bildung des Säuretrichlorids der Formel III

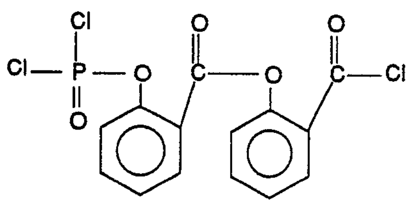

(III)

das in situ hydrolysiert wird durch Behandlung mit Wasser in einem organischen Medium.

3. Verfahren nach Anspruch 2, dadurch gekennzeichnet, daß die Säure der Formel I aus einer wäßrigen Acetonlösung isoliert wird durch Zugabe eines inerten Lösungsmittels.

4. Verfahren nach Anspruch 3, dadurch gekennzeichnet, daß die Säure der Formel I aus einem heterogenen Wasser-Methylenchlorid-Medium isoliert wird.

5. Verbindung nach Anspruch 1 als entzündungshemmendes, antipyretisches und analgetisches Mittel.

**Revendications**

1. Acide 2-(2-phosphonoxyphényl-carbonyloxy)-benzoïque de formule I:

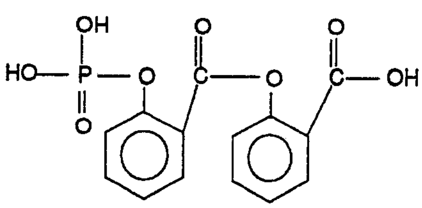

• $H_2O$ (I)

et ses sels avec des métaux mono-, di et trivalents.

2. Procédé pour la préparation de l'acide 2-(2-phosphonoxyphényl-carbonyloxy)-benzoïque de formule I:

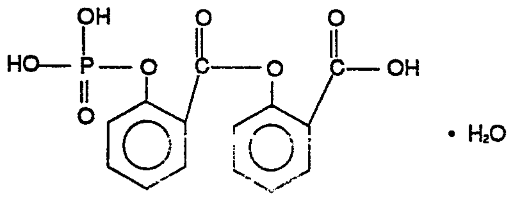

(I)

caractérisée en ce que l'on fait réagir l'acide 2-(2-phosphonoxyphényl-carbonyloxy)-benzoïque de formule II

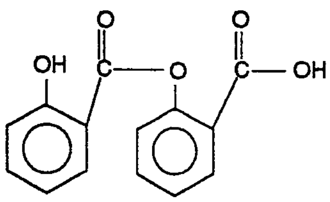

(II)

avec du pentachlorure de phosphore à des températures allant de 0,0°C jusqu'à 100°C pour donner le trichlorure acide de formule III

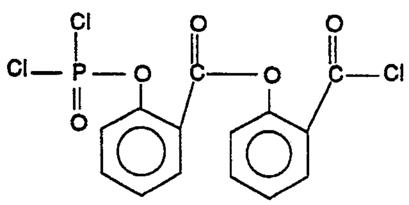

qui est hydrolysé *in situ* par traitement avec de l'eau dans un milieu organique.

3. Procédé selon la revendication 2, caractérisé en ce que l'acide de la formule I est isolé à partir d'une solution d'acétone aqueuse par addition d'un solvant inerte.

4. Procédé selon la revendication 3, caractérisé en ce que l'acide de la formule I est isolé à partir d'un milieu hétérogène chlorure de méthylène-eau.

5. Composé selon la revendication 1 en tant qu'agent anti-inflammatoire, anti-pyrétique et analgésique.